Europäisches Patentamt

(19) European Patent Office

Office européen des brevets

(11) Publication number: **0 071 482**
A1

(12) # EUROPEAN PATENT APPLICATION

(21) Application number: 82304018.3

(22) Date of filing: 29.07.82

(51) Int. Cl.³: **H 02 G 15/105**
**H 02 G 15/10**

(30) Priority: 30.07.81 US 288427

(43) Date of publication of application:
09.02.83 Bulletin 83/6

(84) Designated Contracting States:
AT BE CH DE FR IT LI NL SE

(71) Applicant: RAYCHEM CORPORATION
300 Constitution Drive
Menlo Park California 94025(US)

(72) Inventor: Clabburn, Robin James Thomas
139 Buckthorn Way
Menlo Park California 94025(US)

(72) Inventor: Larsson, Peter Lars
303 Cypress Point Drive
Mountain View California 94043(US)

(74) Representative: Jones, David Colin et al,
RAYCHEM LIMITED Morley House 26 Holborn Viaduct
London E.C.1.(GB)

(54) Connection assembly and method for power cables.

(57) An assembly and method is provided for connecting the metal armour, screen or shielding (4) of one power cable (2) of a joint connecting two or more power cables, with a metal bridging element (10) which spans the joint and is connected to the metal armour, screen or shielding of the other power cable or cables of the joint. The assembly comprises a hollow metal cylinder (20), a heat-recoverable sleeve (26) for sealing the cylinder (20) to the inner sheath (5) of the power cable (2) and two worm drive clamps (28,29) for respectively securing the metal armour, screen or shielding (4) of the cable and for securing the metal bridging element (10) to the metal cylinder (20). The metal bridging element (10) can be a part of a protective joint enclosure placed over the joint area.

./...

Croydon Printing Company Ltd.

FIG_1

## CONNECTION ASSEMBLY AND METHOD
## FOR POWER CABLES

This invention relates to a connection assembly and connection method for power cables, and more particularly to an assembly for and method of connecting the metal armour, screen or shielding of a power cable to a metal bridging element which spans a joint with, and is connected to the metal armour, screen or shielding of, another power cable.

Electric power cables are of two general types, paper insulated and polymer insulated. A paper insulated cable comprises an inner core containing current carrying conductors, usually, three or four in number, which are insulated from each other and are surrounded by an insulation comprising oil impregnated paper. A metal sheath, generally of lead or aluminium, surrounds the insulation to protect the core from moisture. Surrounding the metal sheath is a layer of armour which provides longitudinal strength and mechanically protects the metal sheath. The armour is made of metal, generally steel or aluminium and can be in the form of wires, sheet or tape. The armour and metal sheath may be required to carry significant earth fault currents. The armour is provided with additional outer protection, which typically is a bitumen/hessian combination, but which can also be a polymeric layer such as polyvinyl chloride. Where bitumen/hessian are used as outer protection, this layer does not effectively prevent water, after long periods in service, from penetrating through to the armour layer and then wicking down the individual metal components (or layers) of the cable. The oil impregnated paper insulation is particularly sensitive to water, and where the lead or aluminium sheath is removed, such as when a joint is made between cables, precautions must be taken to prevent water coming into contact with the insulation and/or conductors of the cable core.

A polymer insulated cable consists of one or more insulated conductors, which may be solid metal or of stranded construction and are typically of copper or aluminium, and insulating polymer, which is typically cross-linked polyethylene, polyvinyl chloride or ethylene-propylene rubber and is generally applied by extrusion. Individual insulated conductors are known as cores, and a plurality of cores are layered together to form a cable. Most commonly, polymer insulated power cables contain one, three or four cores. For practical purposes, the cores of low voltage power cables require additional protection which usually consists of one or more outer plastic sheaths applied by extrusion and metal wires or tapes wrapped around the layered cores and directly beneath the outer protective jacket. These metal wires or tapes are known as screening or armouring, depending on their size, type and the construction of the cable. In some cases, these metal components are embedded in a compound to prevent the progress of moisture along individual strands. Higher voltage polymer insulated power cables are of essentially similar construction but with minor, but nonetheless, significant differences. The core insulation is typically thicker, of high quality and each core is surrounded by its own screen. The core screens vary widely, depending on the manufacturer and on the requirements of the user, and may consist of the following used separately or in combination: copper wires or tapes, carbon black impregnated fabric tapes, extruded low resistance plastic tapes, conductive coatings applied to the surface of the core insulation by extrusion, dispersion coating and the like.

Various combinations of armour, screen, insulation etc. are possible and a variety of power cables are in use. Power cables are connected together making a joint, which consists of one cable jointed to at least one other power cable. In making the joint, the various layers of insulation, metal sheath, armour, shielding, etc. are removed from the ends of cables to be joined. The area of the joint must be protected from the environment, particularly from moisture ingress after the joint has been made. It is necessary to interconnect not only the conductors, but also the metal armour, screen or shielding of the power cables at the joint.

In the past, the joint area has been protected by placing a joint case, generally a metal box, around the joint. The metal box is sealed and electrically connected to the metal sheath of the cable and the metal armour, screen or shielding using solder. The joint case is filled with a potting composition, usually bitumen or certain curable resin systems which are known in the art. The metal joint case is usually of lead, steel, tinned copper or cast iron and provides a fault current path across the joint as well as protection from moisture ingress. Joint cases of moulded plastics material can also be used, and then a metal braid is soldered to the metal armour, screen or shielding of one cable of the joint, extends across the joint and is connected to the other cable to provide a fault current path across the joint.

A joint case for power cables is described in U.S.Patent No.4282397. This joint case comprises a hollow relatively rigid cylindrical shell having a longitudinal split so that it can be wrapped around an already-formed joint. The shell is preferably of metal and has a polymer sheet bonded to its external surface. The shell has tapered end regions formed of prongs or fingers. When the case is used to protect a joint between power cables, the tapered ends of the shell are soldered to the lead or aluminium sheath of the power cable.   The metal armour, screen or shielding is also soldered to the metal sheath, preferably at the same points so that only one solder joint is required at each end.   A fault current path is thus provided across the joint by the metal shell of the joint case as it is electrically connected to the jointed cables.   The assembly is environmentally sealed by a dimensionally-recoverable sleeve extending over the joint case or by two shorter sleeves over respective tapered end regions.

In the jointing methods described above, a metal braid and/or the joint case is soldered to the metal sheath of the cable, as is the metal armour, screen or shielding. Such a solder connection is difficult to achieve in the field and requires a high level of skill to be completed successfully.

Another approach taken in the art to connect a metal bridging element to the metal armour, screen or shielding of a power cable is the provision of two metal rings which encircle the cable and can be fastened together, for example, by bolts or screws.   The ends of the armour and metal element are placed between the two rings which are then fastened together. A metal braid can be soldered to the lead or aluminium sheath of the cable, if present, and positioned between the rings to provide electrical connection to such sheath.   This electrically and mechanically connects the armour, screen or shielding and the metal bridging element.   Such a system is generally used with polymer insulated electrical cables used at low voltages, e.g. below one thousand volts.   Its use has been limited to polymer insulated cables because of their relative insensitivity to moisture ingress.   The use of the metal rings to clamp the armour and the metal bridging element does not provide a seal to prevent water from wicking along the armour and entering the joint area, a situation which could be detrimental to paper insulated cables.

In accordance with one aspect of the present invention, there is provided an assembly for connecting the metal armour, screen or shielding of a power cable to a metal bridging element which spans a joint between said power cable and at least one other power cable, said power cable comprising a core, a sheath surrounding said core, metal armour, screen or shielding surrounding the sheath, and an outer insulating layer; wherein said assembly comprises: a hollow metal cylinder having two end portions and an intermediate portion and an internal diameter greater than the diameter of said cable sheath; means for sealing one end portion of said cylinder to the sheath surrounding the core of said cable; and clamping means for securing the metal armour, screen or shielding to said cylinder and for securing said cylinder to one end of said metal bridging element.

The diameter of the cylinder may exceed the diameter of the cable such that if necessary it can be slipped over the end of the whole cable prior to the joint being made between the said cable and another cable.

The metal armour, screen or shielding of the cable and the metal bridging element are preferably clamped to the cylinder in spaced apart relationship such that the centre portion of the surface of the cylinder remains clear. This surface provides a sealing surface for a dimensionally-recoverable sleeve which preferably is later positioned over the connection assembly and recovered and sealed thereto. The centre sealing surface may be raised to enhance contact between the cylinder and the recovered sleeve Such sealing substantially prevents any water that may wick along the armour screen, or shielding from progressing across the cylinder and into the joint.

The cylinder may have smooth inner and outer surfaces, or its outer surface may have one, or more, raised portions. In the latter case, one or both of the end portions of the cylinder preferably comprises an outwardly-extending rib, and preferably the intermediate portion comprises at least one outwardly-extending rib.

The clamping means may comprise one or more worm drive clamps, which preferably are shear head clamps. In a preferred embodiment two worm drive clamps are arranged to provide clamping, between outwardly-extending ribs of the cylinder, of the cable armour, screen or shielding at one end and the metal bridging element at the other end of the cylinder.

The sealing of the cylinder to the cable sheath may be effected by a polymeric sleeve. The sleeve may be, for example, a dimensionally recoverable, preferably heat-recoverable, sleeve, that is recovered over one end portion of the cylinder and an adjacent portion of the cable sheath. The sleeve may be coated with an adhesive or sealant that provides a water tight seal between the sleeve and the cable and the cylinder. Where the sleeve is a heat-shrinkable sleeve, it can advantageously be internally coated with a mastic or a heat-activatable adhesive, such as a hot-melt adhesive. Dimensionally recoverable sleeves are disclosed in, for example, U.S.Patent Nos.2027962, 3086242, 4070746 and 4135553.

The metal bridging element of the joint may be the joint case of above-mentioned U.S.Patent No.4282397.

In accordance with another aspect of the invention, there is provided a method of connecting the metal armour, screen or shielding of a power cable to a metal bridging element which spans a joint between said power cable and at least one other power cable, said power cable comprising a core, a sheath surrounding said core, metal armour, screen or shielding surrounding the sheath, and an outer insulating layer, the method comprising the steps of: positioning over the end of said cable, a metal cylinder having two end portions and an intermediate portion and an internal diameter greater than the diameter of said cable sheath; sealing said cylinder to the sheath surrounding the core of said cable; and clamping said metal armour, screen or shielding, and one end of said metal bridging element to said cylinder.

In accordance with a further aspect of the invention, the connecting assembly is employed in a method of protecting a joint between power cables.

Use of the assembly results in an electrical connection with good mechanical strength and provides an environmental seal substantially preventing water that may wick along the armour layer from penetrating into the joint. Furthermore, the assembly is relatively simple and easy to install in the field. Thus, this invention provides an assembly for connecting the metal armour, screen or shielding of jointed power cables which overcomes, or at least alleviates, the disadvantages of prior connections and in particular does not require the use of solder to make the connection.

Another aspect of this invention comprises a method of protecting a joint between power cables, each said cable comprising an inner core surrounded by a sheath, metal armour, screen or shielding and an outer insulating layer, which method comprises: positioning over the end of at least one of said cables, a metal cylinder having two end portions and an intermediate portion and an internal diameter greater than the diameter of said cable sheath; placing around the joint, a joint case having a continuous metal element extending the length of said joint case; sealing said cylinder to the sheath surrounding the core of said cable; clamping said metal armour, screen or shielding to said cylinder; clamping one end of the metal element of said joint case to said cylinder; placing a dimensionally recoverable polymeric sleeve over at least a portion of said joint case, said metal cylinder and the end of said cable; and causing the sleeve to recover into contact with and sealing to said joint case, said cylinder and said cable.

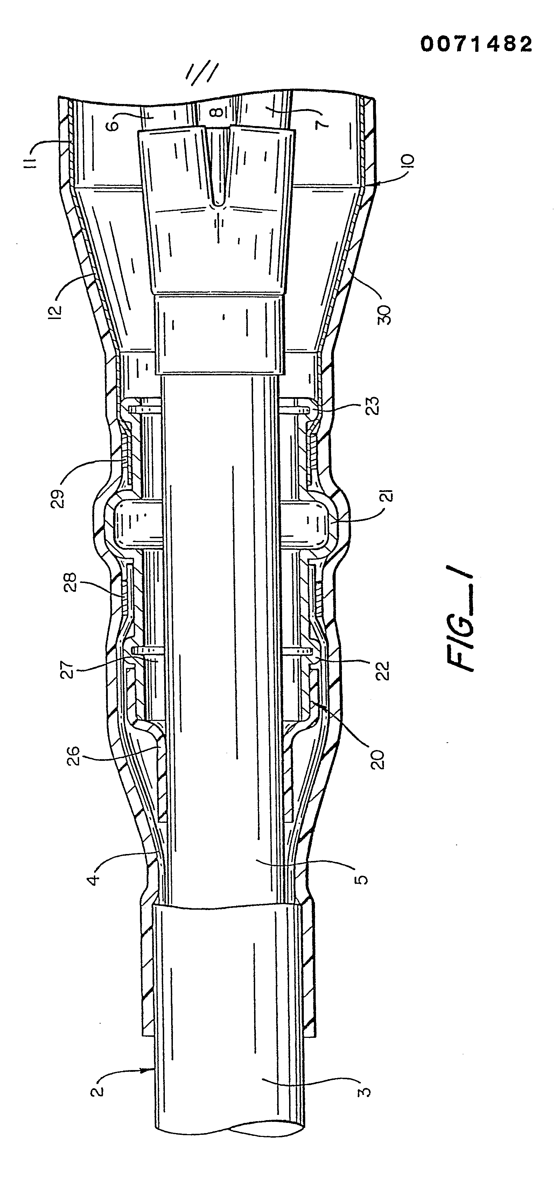

A cable connecting assembly, and a method of jointing cables, each in accordance with the present invention, will now be described by way of example, with reference to the accompanying drawing, which shows a portion of an assembly for connecting the armour of an armoured power cable to a joint case installed to connect one end of a joint case having a metal shell with tapered end regions.

Referring to the drawing, an armoured power cable 2 is jointed to at least one other power cable, not shown. The other power cable need not be the same type as cable 2 but can be paper insulated or polymer insulated.

The power cable 2 has an outer polymeric jacket 3 which has been removed from the end of the cable to expose the underlying armour 4. The armour 4 comprises wires forming a layer encircling the cable. The armour wires 4 have been removed from the end of the cable 2 and displaced from the lead sheath 5 of the cable for a distance from the end of the cable sufficient to permit installation of the clamp assembly. The lead sheath 5 surrounds the core of the cable containing the conductors 6, 7 and 8 which carry the electric current. Conductors 6, 7 and 8 are jointed to similar conductors of at least one other power cable (not shown). The term "joint area" as used herein refers to the area between the cables from the outer polymeric jacket 3 of the cable shown to the outer polymeric jacket of the other cable of the joint.

The assembly includes a hollow metal cylinder 20. The cylinder 20, which has an internal diameter greater than the diameter of at least the sheath 5 of the cable 2, is positioned over the exposed lead sheath 5 before the cable conductors are jointed. The metal cylinder is of galvanised steel, but may be of other material, such as aluminium or (non-galvanised) steel. The hollow unitary metal cylinder can have smooth inner and/or outer surfaces or can have raised sections as shown in the drawing. The cylinder 20 has a raised centre portion 21 and two smaller raised portions or protuberances 22 and 23 one on each side of the centre portion.

The hollow metal cylinder 20 is sealed at one end to the underlying lead sheath 5 by a polymeric sleeve 26. An air space 27 exists between the cylinder 20 and the lead sheath 5. The polymeric sleeve 26 is installed by positioning a dimensionally-recoverable sleeve over the end section of the cylinder 20 and adjacent the lead sheath 5. The sleeve 26 is then caused to recover into intimate contact with the cylinder 20 and lead sheath 5, for example by applying heat in the case of a heat-recoverable sleeve. The inner surface of the sleeve 26 is preferably coated with adhesive or sealant, to provide a water tight seal, and upon recovery is bonded to the underlying cylinder 20 and lead sheath 5. The polymeric sleeve 26 can be of polyethylene and in this use is cross-linked polyethylene. Other polymeric materials can be used in making dimensionally recoverable sleeves as disclosed in U.S.Patent Nos.2,027,962; 3,086,242; 4,070,746 and 4,135,553.

A joint case 10, only part of which is showing, is positioned over the spliced conductors (not shown). The joint case 10 comprises an inner metal shell having an intermediate body region 11 and two tapered end regions 12, only one of which is shown. Each tapered end region 12 consists of a series of prongs or fingers making a smooth transition from the larger dimension body region 11 down to the smaller diameter cable 2. The body section is preferably coated with an adhering polymeric layer. A joint case of this type is described in above-mentioned U.S.Patent No.4,282,397. It is to be understood that a metal bridging element other than a joint case may be employed, for example a metal braid or a rod.

The armour 4 and the tapered end region 12 of the metal shell of joint case 10 are clamped to the cylinder 20 by clamps 28 and 29 respectively, which are worm drive clamps. The armour 4 and the joint case 10 are clamped to the cylinder 20 inwardly of protuberances 22 and 23, and preferably on different sides of the protuberance 21. The protuberances add mechanical strength to the installed clamp assembly as they prevent the clamped armour 4 and joint case 10 from being displaced from the clamps 28 and 29. If desired, the clamping of the armour wires 4 (or the screen or shielding of cables of other construction) may be enhanced by bending the wires back over the clamp.

When the power cable to be jointed has an inner metal sheath, for example of lead or aluminium, the metal sheath can be electrically connected to the metal cylinder 20 and to the metal bridging element by soldering a metal braid, for example, to the lead sheath and then clamping the braid to cylinder and metal bridging element by the clamp 29.

The clamps 28 and 29 may be connectional hose clamps, but preferably they are shear head clamps, that is to say the bolt or screw of the clamp is arranged to shear and break off at a pre-determined tension. In this way, the correct tension can conveniently be applied. Furthermore, a lower and smoother profile may thus be obtained, which facilitates subsequent protection of the joint. Alternatively, spring metal roll springs may be employed as clamps.

The entire joint area is covered with a protective layer 30 which is a dimensionally-recovered polymeric sleeve. Such a sleeve is installed by positioning a recoverable sleeve over the entire area and then causing the sleeve to recover into intimate contact with the joint area, for example by heating in the case of a heat-recoverable sleeve. The sleeve is coated with an adhesive and is bonded to the underlying cable and joint area. The sleeve 30 is sealed to the centre raised portion 21 of metal cylinder 20. The seal to the raised portion of the cylinder further insures that moisture will not penetrate into the joint area. In particular, it prevents any water that may wick along the armour wires 4 from seeping into the joint area.

One or more of the dimensionally-recoverable sleeves employed can be a wraparound sleeve, such as that disclosed in U.S.Patent No.3,445,336. Means other than a recoverable polymeric sleeve, for example a tape, which may be a mastic tape, may be used to seal the cylinder of the assembly to the cable sheath.

In a preferred embodiment, utilising the joint case described in U.S.Patent No.4282397, the metal shell of the joint case has an adherent polymer layer or coating. In using such a splice case, a polymeric heat-recoverable sleeve can be used as above, enclosing the entire joint area. Alternatively, a pair of shorter sleeves can be used, each extending from the polymer coated body region of the joint case over the adjacent tapered end region, the clamping assembly and the outer sheath of the cable.

As shown, the cylinder 20 has three ribs, but it is envisaged that it may be provided with a different number of ribs. For example, if the cylinder is provided with four ribs, the armour may be clamped between the two ribs at one end, and the metal bridging element between the two ribs at the other end, thus providing a smooth surface between the intermediate pair of ribs on to which a polymeric sealing sleeve may be recovered.

Further water blocking of a cable, lead sheathed or plastic insulated, may be provided by sealing material disposed inside the metal cylinder. For example, the material may be located within one, or more, of the ribs of the cylinder. A suitable material is a resin that cross-links and foams under the effect of heat. Thus, when heat is applied to recover a heat-recoverable polymeric sleeve on to the cylinder, water blocking within the cylinder is also effected by expansion of the resin to fill the space between the cylinder and the enclosed cable.

CLAIMS                    MP0777EPC

1.    An assembly for connecting the metal armour, screen or shielding of a power cable to a metal bridging element which spans a joint between said power cable and at least one other power cable, said power cable comprising a core, a sheath surrounding said core, metal armour, screen or shielding surrounding the sheath, and an outer insulating layer; wherein said assembly comprises: a hollow metal cylinder having two end portions and an intermediate portion and an internal diameter greater than the diameter of said cable sheath; means for sealing one end portion of said cylinder to the sheath surrounding the core of said cable; and clamping means for securing the metal armour, screen or shielding to said cylinder and for securing said cylinder to one end of said metal bridging element.

2.    An assembly according to Claim 1, wherein at least one of the end portions of the cylinder comprises an outwardly-extending rib.

3.    An assembly according to Claim 1 or 2, wherein the intermediate portion of the cylinder comprises at least one outwardly-extending rib.

4.    An assembly according to Claim 1, wherein the clamping means is located axially between ribs on the outer surface of the cylinder.

5.    An assembly according to any preceding Claim, wherein the clamping means comprises one or more worm drive clamps.

6.    An assembly according to Claim 5, wherein the or each clamp comprises a shear head clamp.

7. An assembly according to any preceding Claim, wherein water-sealant material is disposed inside the cylinder.

8. An assembly according to Claim 7, wherein the sealing material is located inside an outwardly-extending rib.

9. An assembly according to Claim 7 or 8, wherein the water sealant material comprises a foamable material.

10. An assembly according to Claim 9, wherein the sealant material is foamable under the action of heat.

11. An assembly according to any preceding Claim, wherein said cylinder is of steel, galvanised steel, or aluminium.

12. An assembly according to any preceding Claim, wherein said end portion sealing means comprises a polymeric sleeve, preferably of polyethylene.

13. An assembly according to Claim 12, wherein said polymeric sleeve is of cross-linked polyethylene.

14. An assembly according to Claim 12 or 13, wherein said polymeric sleeve is a dimensionally recoverable polymeric sleeve, preferably a heat-recoverable polymeric sleeve.

15. An assembly according to any of Claims 12 to 14, wherein said sleeve is coated on the inner surface thereof with a heat activatable adhesive.

16. A method of connecting the metal armour, screen or shielding of a power cable to a metal bridging element which spans a joint between said power cable and at least one other power cable, said power cable comprising a core, a sheath surrounding said core, metal armour, screen or shielding surrounding the sheath, and an outer insulating layer, the method comprising the steps of: positioning over the end of said cable, a metal cylinder having two end portions and an intermediate portion and an internal diameter greater than the diameter of said cable sheath; sealing said cylinder to the sheath surrounding the core of said cable; and clamping said metal armour, screen or shielding, and one end of said metal bridging element to said cylinder.

17. A method of protecting a joint between power cables, each said cable comprising an inner core surrounded by a sheath, metal armour, screen or shielding and an outer insulating layer, which method comprises: positioning over the end of at least one of said cables, a metal cylinder having two end portions and an intermediate portion and an internal diameter greater than the diameter of said cable sheath; placing around the joint, a joint case having a continuous metal element extending the length of said joint case; sealing said cylinder to the sheath surrounding the core of said cable; clamping said metal armour, screen or shielding to said cylinder; clamping one end of the metal element of said joint case to said cylinder; placing a dimensionally recoverable polymeric sleeve over at least a portion of said joint case, said metal cylinder and the end of said cable; and causing the sleeve to recover into contact with and sealing to said joint case, said cylinder and said cable.

18. A method according to Claim 16 or 17, wherein said cylinder is sealed to said sheath by: positioning a dimensionally recoverable polymeric sleeve over one end portion of said cylinder and said sheath, said sleeve being coated on the inside thereof with an adhesive, and causing said sleeve to recover dimensionally into intimate contact with said cylinder and said cable sheath and being sealed thereto by said adhesive.

19. A method according to Claim 18, wherein said polymeric sleeve is a heat-recoverable sleeve and said sleeve is dimensionally recovered by applying heat thereto.

20. A method of connecting the armour wires and metal sheath of a paper insulated power cable to the metal armour, screen or shielding of another power cable jointed to said paper insulated cable, said paper insulated cable comprising a core having a plurality of conductors insulated from each other with oil impregnated paper, a metal sheath surrounding said core and armour wires surrounding said sheath, and an outer insulated layer, which method comprises: displacing the armour from the end of said paper-insulated cable to expose the underlying metal sheath; placing a unitary metal cylinder over the metal sheath at the end of said cable; placing a dimensionally-recoverable sleeve over one end of said cylinder and the adjacent metal sheath of the cable, said sleeve having a coating of sealant on the inner surface thereof; causing said sleeve to recover dimensionally into contact with said cylinder and metal sheath and to be sealed thereto; clamping the armour wires of the said cable to said cylinder; clamping one end of a metal bridging element to said cylinder; and connecting the other end of said metal bridging element to the metal armour, screen or shielding of said other power cable.

21. A method of connecting the metal armour, screen or shielding of a power cable to a metal bridging element which spans a joint between said power cable and at least one other cable, said power cable comprising a core, a sheath surrounding said core, metal armour, screen or shielding surrounding the sheath, and an outer insulating layer, wherein the method comprises effecting said connection by applying to the cable and bridging element an assembly according to any of Claims 1 to 15.

FIG__I

0071482

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | H 02 G 15/105 |
| X | GB-A- 12 146 (VERNIER)(AD1909) | 1,2,4, 11,16, 17,20, 21 | H 02 G 15/10 |
| | * Page 5, line 36 - page 6, line 27; figures 7-9 * | | |
| | --- | | |
| Y | US-A-1 647 699 (HOEFTMANN) | 1,2,4, 11,16, 17,20, 21 | |
| | * Page 1, line 33 - page 2, line 23; figures 1-5 * | | |
| | --- | | |
| Y | DE-B-2 323 167 (SIEMENS) | 1-5,7, 8,11, 16,17, 20,21 | |
| | | | TECHNICAL FIELDS SEARCHED (Int. Cl. ³) |
| | * Column 2, line 1 - column 4, line 64; figures 1-10 * | | |
| | --- | | H 02 G 15/00 |
| A | FR-A-2 222 778 (RAYCHEM) | 1,12- 14,18- 20 | |
| | * Page 18, line 3 - page 23, line 32; figures 1-18 * | | |
| | ----- | | |

The present search report has been drawn up for all claims

| Place of search | Date of completion of the search | Examiner |
|---|---|---|
| THE HAGUE | 29-10-1982 | LOMMEL A. |